Europäisches Patentamt

(19) European Patent Office

Office européen des brevets

(11) Numéro de publication: **0 258 121**
**B1**

(12) **FASCICULE DE BREVET EUROPEEN**

(45) Date de publication du fascicule du brevet:
05.12.90

(21) Numéro de dépôt: **87401827.8**

(22) Date de dépôt: **06.08.87**

(51) Int. Cl.⁵: **B32B 27/18, B29C 51/00**

(54) Semi-produit à base de résine thermoplastique, surstabilisé thermiquement.

(30) Priorité: **29.08.86 FR 8612259**

(43) Date de publication de la demande:
**02.03.88 Bulletin 88/9**

(45) Mention de la délivrance du brevet:
**05.12.90 Bulletin 90/49**

(84) Etats contractants désignés:
**AT BE CH DE ES FR GB IT LI LU NL SE**

(56) Documents cités:
**EP-A- 0 222 296**
**FR-A- 2 380 132**
**FR-A- 2 506 316**
**GB-A- 1 181 249**
**GB-A- 2 050 247**
**US-A- 2 645 249**
**US-A- 3 518 153**

(73) Titulaire: **ARJOMARI-PRIOUX Société anonyme dite, 3, rue du Pont de Lodi, F-75261 Paris Cedex 06(FR)**

(72) Inventeur: **De Rancourt, Hubert, 53ter rue Sermorens, F-38500 Voiron(FR)**
Inventeur: **Gambert, Xavier, La Favetière, F-38850 Charavines(FR)**

(74) Mandataire: **Portal, Gérard et al, Cabinet Beau de Loménie 55, rue d'Amsterdam, F-75008 Paris(FR)**

**Description**

La présente invention concerne un semi-produit à base de résine thermoplastique et notamment un semi-produit du domaine des matériaux en carton et papier à plusieurs couches.

On connaît déjà des plaques constituées d'une résine thermoplastique renforcée de fibres de verre continues ou coupées, fabriquées par extrusion-lamination ou densification à chaud de feuilles, telles que décrites par exemples dans les FR-A 2 481 707 et FR-A 2 508 842.

Ces plaques constituent des semi-produits comprenant au moins deux couches contenant une résine thermoplastique et capable d'être soumises à un traitement thermique ultérieur incluant la fusion de la résine thermoplastique dans chacune desdites couches contenant la résine thermoplastique, ces semi-produits ont au moins une couche de surface destinée à être exposée à une source thermique pendant ledit traitement thermique et au moins une autre couche qui n'est pas directement exposée à la source thermique. Ces plaques sont destinées à être transformées par moulage-estampage ou thermoformage et doivent donc subir un traitement de préchauffage.

Le document GB-A 2 050 247 décrit un film laminé pour l'emballage alimentaire comprenant une couche barrière au gaz en copolymère de chlorure de vinylidène, ainsi qu'une couche renforçante en association avec la couche barrière ou en sandwich. Le film laminé décrit dans ce document présente des différences de viscosité entre les couches.

Le document GB-A 1 181 249 est relatif à un procédé de production de fibres thermoplastiques frisées. Ce document a pour but de résoudre le problème technique du frisage en obtenant les fibres par fibrillation de plaques ou de tubes d'au moins deux couches de résine compatible, différente ou identique ayant soit des additifs différents, soit des structures physiques différentes. Il est également prévu des procédures d'étirement. Ce document ne concerne donc pas des semi-produits à base de résine thermoplastique devant subir un traitement thermique lors d'une mise en forme par moulage-estampage ou thermoformage. Le document EP-A 0 222 296, publié le 20 mai 1987, postérieurement à la date de dépôt de la présente demande, est relatif à une feuille multi-couches coextrudée, orientée biaxialement, ce qui est nécessaire dans le cadre des matériaux diélectriques.

Parmi les modes préférés de préchauffage, l'infra-rouge ou l'étuvage à air chaud sont le plus couramment rencontrés dans l'industrie et offrent un environnement très oxydant. Lors de cette opération, les plaques initialement denses présentent, au fur et à mesure de la tusion de la résine, un phénomène d'expansion dû au fait que les fibres de verre prennent leur conformation spatiale d'origine. Cette expansion se traduit par une chute de la conductibilité thermique qui entraîne une surchauffe de la surface des matériaux et leur dégradation en cas d'apport énergétique intense. Or, afin d'assurer la cadence de transformation souhaitée, l'apport énegétique doit être intense et le matériau à transformer doit donc présenter une résistance thermique nettement supérieure à celle couramment utilisée dans les autres procédés de transformation plastique, tels que l'injection et l'extrusion. Donc, le niveau de résistance thermique requis nécessite d'introduire une grande quantité de stabilisant thermique, lors de la préparation du matériau. Il est bien connu de l'homme du métier que de tels taux, quelques pourcents en poids, sont préjudiciables au maintien des propriétés mécaniques, l'odeur, l'aspect extérieur . . . En outre, cette adjonction augmente le coût de façon significative.

Le but de l'invention est de proposer un semi-produit qui résiste à un traitement thermique d'apport énergique intense, tout en conservant ses propriétés.

A cet effet, la présente invention propose un semi-produit surstabilisé thermiquement, comprenant au moins deux couches contenant une résine thermoplastique, capable d'être soumis à un traitement thermique complémentaire incluant la fusion de la résine thermoplastique dans chacune des couches thermoplastiques, ledit produit ayant au moins une couche de surface S destinée à être exposée à une source thermique pendant ledit traitement thermique, et au moins une autre couche C qui n'est pas directement exposée à ladite source thermique, caractérisé en ce que la couche S présente un taux global en poids de stabilisant de 3 à 30 fois supérieur à la quantité de stabilisant thermique contenu dans la couche C ; la couche S ayant une masse surfacique comprise entre 50 et 600 g.m$^{-2}$, chaque couche contenant de la résine thermoplastique étant ainsi capable d'être amenée à la fusion pendant le traitement thermique sans subir de dégradation thermique.

Autrement dit, le semi-produit de l'invention répond à la formule suivante:

$$ 3 \leq \frac{\Sigma x\,(C)}{Y(C)} \leq \frac{\Sigma x\,(S)}{Y(S)} \leq \frac{30 \leq x\,(C)}{Y(C)} $$

où:

$\Sigma x\,(S)$ = poids de stabilisant contenu dans la couche S
$\Sigma x\,(C)$ = poids de stabilisant contenu dans la couche C
$Y(S)$ = poids total de S
$Y(C)$ = poids total de C

On entend par source thermique un moyen de chauffage par circulation d'air chaud ou par énergie radiante, notamment par rayonnement infrarouge.

On entend par "stabilisant" un additif choisi parmi ceux couramment utilisés par l'homme du métier pour protéger les résines thermoplastiques tant lors de leur transformation que dans le vieillissement à long terme, puisqu'il est bien connu que plusieurs agents, notamment les antioxydants, présentent plus ou moins cette double activité.

Si la stabilisation thermique de la couche S doit permettre d'assurer la protection de la plaque lors de la transformation, elle doit aussi être suffisante pour satisfaire, après transformation, à la résistance au vieillissement thermique de la résine de cette couche S.

Le semi-produit obtenu conformément à l'invention est un semi-produit "surstabilisé", i.e. dont la ou les couches de surface S, qui reçoivent lors du réchauffage l'énergie incidente, comportent un pourcentage total en poids de stabilisant thermique de 3 à 30 fois supérieur à celui de la ou des couches C qui, à coeur du semi-produit, ne s'échauffent que par conductibilité thermique au contact d'une couche adjacente.

Le stabilisant peut être de nature différente ou de même nature dans les différentes couches.

Une même couche peut renfermer au moins deux stabilisants différents.

Lesdits stabilisants sont préférentiellement un protecteur thermique et un agent antiviellissement.

Préférentiellement, au moins la couche S renferme un stabilisant de transformation et lesdites couches S et C renferment un agent anti-vieullissement. Avantageusement, ledit stabilisant de transformation est également l'agent anti-vieillissement. L'épaisseur de couche S est préférentiellement d'au plus 700 micromètres pour assurer la protection requise.

Dans une variante, au moins une partie de la couche de surface S comporte un film de résine thermoplastique surstabilisé thermiquement.

Dans une autre variante, le semi-produit n'a qu'une seule couche de surface S, qui présente ledit taux global en poids de stabilisant de 3 à 30 fois supérieur à celui de ladite couche C.

Préférentiellement, au moins l'une des deux couches S et C comporte un matériau papetier.

Une application de l'invention concerne la fabrication d'articles thermoplastiques comportant un thermotraitement, par exemple d'accessoires en industrie automobile.

L'invention sera mieux comprise à la lecture de la description qui va suivre et d'exemples l'illustrant, de façon non limitative.

Le semi-produit, à base de résine thermoplastique, est constitué d'au moins deux couches principales, à savoir :
- une couche S, disposée en surface dudit semi-produit et destiné à être exposée à une source thermique.
- une couche C, non directement exposée à ladite source thermique.

Plusieurs variantes sont envisageables : une couche de coeur C entre deux couches de surface S ou une couche C recouverte d'une seule couche S, si l'exposition thermique n'est effectuée que sur une face du semi-produit.

Par ailleurs, le semi-produit peut comporter d'autres constituants qui s'ajoutent à ces couches principales : un support autre qu'une couche S ou des éléments intermédiaires entre les couches S et C.

En outre, chacune des couches S et C peut être composée elle-même d'une pluralité de feuilles, obtenues par voie papetière, comme l'enseignent par exemple les documents cités en préambule de la présente description.

Dans chacun des exemples qui vont suivre, le matériau totalement densifié en plaque est exposé dans un four à rayonnement infrarouge de longueur d'onde à l'énergie maximum de 4,2 micromètres, de densité de puissance 20 kW/m2, le temps juste nécessaire pour atteindre au centre de la plaque la fusion de la résine, soit une température de 180°C pour une matrice polyéthylène-polypropylène. La stabilité thermique à la transformation est notée par observtion de la pièce expérimentale d'environ 120g ainsi obtenue après moulage-estampage.

Dans les exemples qui suivent, les stabilisants utilisés sont des antioxydants, dont les pourcentages sont exprimés en poids d'antioxydant rapporté au poids total de la couche dans laquelle ils sont introduits, alors que les taux moyens ont été calculés par rapport au poids total de la plaque.

Exemple 1 (échantillon témoin)

On préchauffe pendant 1 min 30 s une plaque de 4,5kg/m² formée par densification à chaud de feuilles de composition C1 préparée avec 5% d'antioxydant AOI. La pièce moulée correspondante présente une amorce de dégradation, c'est-à-dire que lors d'une suite répétée de l'essai, il y a trace de dégradation une fois sur deux.

Exemple 2

On effectue le même préchauffage qu'à l'exemple 1 sur une plaque de 4,5kg/m² composée d'une couche de plusieurs feuilles de composition C1 avec 0,5% d'antioxydant AOI, située entre deux couches S1 ayant chacune 290g/m² (2 feuilles) et contenant 10% d'antioxydant AOI. Le taux moyen d'AOI n'est donc que de 1,73%, mais la pièce ainsi moulée ne présente aucune trace de dégradation.

Exemple 3

Sur le même principe qu'à l'exemple 2, on part de plaques ayant à coeur une composition C1 avec 0,5% d'antioxydant AOI et en surface 1 feuille de 145 g/m² de composition S1 avec 10 % d'antioxydant AOI.
- en 4,5 kg/m², avec un taux moyen d'AOI de 1,11 %, la pièce moulée après 1 min 30 s ne présente qu'une amorce de dégradation comme à l'exemple 1.
- en 3,6 kg/m², avec un taux moyen d'AOI de 1,26 %, la pièce moulée après 1 min 10s n'est pas dégradée.
La répartition de la plaque en couches C et S dépend de la masse surfacique totale, donc du temps d'exposition nécessaire pour atteindre la température requise de transformation.

Exemple 4

On préchauffe une plaque de 4,5 kg/m² ayant, comme dans l'exemple 2, deux couches S1 de 290 g/m² avec 10 % d'antioxydant AOI mais la couche à coeur est cette fois formée de feuilles de composition C2 avec 0,5 % d'AOI. La pièce obtenue ne comporte pas de trace de dégradation, et présente pour un taux moyen de verre de 26 %, les mêmes caractéristiques mécaniques que celle moulée à partir d'une composition homogène C1 avec 0,5 % d'AOI, après préchauffage dans des conditions douces d'apport énergétique (entre plateaux chauffés à 210°C).

Exemple 5 (échantillon témoin)

On préchauffe une plaque de 4,5 kg/m² densifiée à partir de feuilles de composition C3 stabilisées avec 0,5 % d'antioxydant AOII et 1 % d'antioxydant AOIII. La pièce ainsi obtenue est dégradée.

Exemple 6

On préchauffe cette fois une plaque de 4,5 kg/m² constituée d'une couche de composition C3 avec 0,25% d'AOII et 0,25 % d'AOIII, comprise entre deux couches d'une feuille de 300 g/m² ayant la composition S2 avec 1,5 % d'AOII et 4% d'AOIII. La pièce moulée, pour un taux moyen de stabilisant de 1,17 % (AOII 0,42 %, AOIII 0,75 %) ne présente aucune trace de dégradation.

Exemple 7

On préchauffe une plaque de 4,5 kg/m2 constituée d'une couche de composition C1 avec 0,5% d'AOI, entre cette fois 2 films S3 d'épaisseur 100 micromètres, contenant 15% d'AO IV. La pièce moulée avec un taux moyen de 1,09% de stabilisant, n'est pas dégradée.

Exemple 8

On utilise cette fois un autre four infrarouge pour mouler une pièce industrielle d'épaisseur moyenne 3,5 mm, de cotes 73x42cm dans le plan, ayant une forme complexe avec dans la 3ème dimension un écart de 13cm entre les parties extrêmes.
On part de 5 plaques 70x20cm, de 3,5kg/m2 constituées chacunes d'une couche de composition C1 avec 0,5% d'AO I, comprise entre deux couches d'une feuille de 380g/m2 ayant la composition S2 avec 0,25% d'AO V et 4% d'AO VI (taux moyen de stabilisant 1,31%).
La pièce ne présente aucune dégradation alors qu'à partir de plaques de la seule composition C1, il est impossible d'obtenir une pièce à la fois complète et non dégradée, quelles que soient les conditions de régulation du four.
D'autre part, malgré la différence de taux de verre entre les deux matériaux C et S, la pièce présente un taux de verre de 24,7 ± 0,4% que le prélèvement soit effectué au niveau des plaques initiales ou en bout de pièce après 25cm d'écoulement.

Antioxydants

AOI 4,4' - Thiobis (2-(1,1 - diméthyl) - 5 - méthyl) phénol
AOII Triméthyl - 1, 3, 5, tris - (di - tert - butyl - 3,5 hydroxybenzyl - 4) - 2, 4, 6, - benzène.
AOIII Distéaryl - 3,3' - thiodipropionate.
AO IV Pentaerythrityl-tetrakis (3-(3,5 - di-tert.butyl-4-hydroxyphenyl) - proprionate)
AO V Bis (2-2' méthylène bis (4 méthyl 6 tertiary butylphénol)) téréphtalate.
AO VI 2,6- di-tert.-butyl-4-méthylphenol.

Compositions C préparées selon le document FR-A-2 481 707

C1 Fibres de verre 26 % ; pâte de polyéthylène 15 % ; latex 5 % ; antioxydant ; complément à 100% en poids de poudre de polypropylène.

C2 Fibres de verre 30 %; pâte de polyéthylène 10 %; latex 5 % ; antioxydant ; complément à 100 % en poids de poudre de polypropylène.

C3 Fibres de verre 20 % ; pâte de polyéthylène 10 % ; latex 5 % ; antioxydant ; complément à 100 % en poids de poudre de polypropylène.

Compositions S

S1 Selon le document FR-A-2 508 842

Pâte de polyéthylène 35 % ; latex 5 % ; antioxydant ; complément à 100 % en poids de poudre de polypropylène.

S2 Selon le document FR-A-2 481 707

Identique à la composition C3.

S3 Film polyéthylène basse densité.

## Revendications

1. Semi-produit surstabilisé thermiquement, comprenant au moins deux couches contenant une résine thermoplastique, capable d'être soumis à un traitement thermique complémentaire incluant la fusion de la résine thermoplastique dans chacune des couches thermoplastiques, ledit produit ayant au moins une couche de surface S destinée à être exposée à une source thermique pendant ledit traitement thermique, et au moins une autre couche C qui n'est pas directement exposée à ladite source thermique, caractérisé en ce que la couche S présente un taux global en poids de stabilisant de 3 à 30 fois supérieur à la quantité de stabilisant thermique contenu dans la couche C; la couche S ayant une masse surfacique comprise entre 50 et 600 $g.m^{-2}$, chaque couche contenant de la résine thermoplastique étant ainsi capable d'être amenée à la fusion pendant le traitement thermique sans subir de dégradation thermique.

2. Semi-produit selon la revendication 1 caractérisé en ce qu'au moins la couche S renferme au moins un stabilisant de transformation.

3. Semi-produit selon l'une quelconque des revendications 1 ou 2, caractérisé en ce que lesdites couches S et C renferment au moins un agent anti-vieillissement.

4. Semi-produit selon les revendications 2 et 3, caractérisé en ce que ledit stabilisant de transformation est également l'agent antivieillissement.

5. Semi-produit selon l'une quelconque des revendications 1 à 4, caractérisé en ce que ladite couche S présente une épaisseur d'au plus 700 micromètres.

6. Semi-produit selon l'une quelconque des revendications 1 à 5, caractérisé en ce qu'au moins une partie de ladite couche S comporte un film de résine thermoplastique surstabilisé thermiquement.

7. Semi-produit selon l'une quelconque des revendications 1 à 6 caractérisé en ce qu'une seule couche de surface S présente ledit taux global en poids de stabilisant de 3 à 30 fois supérieur à celui de ladite couche C.

8. Semi-produit selon l'une quelconque des revendications 1 à 7, caractérisé en ce que l'une au moins des deux couches comporte un matériau papetier.

9. Semi-produit selon l'une quelconque des revendications 1 à 8, caractérisé en ce que l'une au moins des deux couches est obtenue par voie papetière et peut être composée elle-même d'une pluralité de feuilles.

10. Produit transformé à partir du semi-produit selon l'une quelconque des revendications 1 à 9, caractérisé en ce qu'il a subi les opérations de moulage-estampage ou thermoformage, et en ce qu'il est de préférence un accessoire de l'industrie automobile.

## Patentansprüche

1. Wärmeüberstabilisiertes Halbfabrikat, welches mindestens zwei ein thermoplastisches Harz enthaltende Schichten umfaßt und einer Wärmenachbehandlung unterzogen werden kann, welche das Schmelzen des thermoplastischen Harzes in jeder der thermoplastischen Schichten umfaßt, wobei das Produkt mindestens eine Schicht mit einer Oberfläche S, die während der Wärmebehandlung einer Wärmequelle auszusetzen ist, und mindestens eine weitere Schicht C, die nicht direkt der Wärmequelle ausgesetzt wird, umfaßt, dadurch gekennzeichnet, daß die Schicht S ein Gesamtgewichtsverhältnis an Stabilisierungsmittel aufweist, das 3 bis 30mal höher als die Menge an in der Schicht C enthaltenem Stabilisierungsmittel ist, wobei die Schicht S eine flächenbezogene Masse zwischen 50 und 600 $g.m^{-2}$ hat, wodurch jede thermoplastisches Harz enthaltende Schicht während der Wärmebehandlung zum Schmelzen gebracht werden kann, ohne einen thermischen Abbau zu erfahren.

2. Halbfabrikat nach Anspruch 1, dadurch gekennzeichnet, daß zumindest die Schicht S mindestens einen Verarbeitungsstabilisator enthält.

3. Halbfabrikat nach einem der Ansprüche 1 oder 2, dadurch gekennzeichnet, daß die Schichten S und C mindestens ein Alterungsschutzmittel enthalten.

4. Halbfabrikat nach den Ansprüchen 2 und 3, dadurch gekennzeichnet, daß der Verarbeitungsstabilisator gleichzeitig das Alterungsschutzmittel ist.

5. Halbfabrikat nach einem der Ansprüche 1 bis 4, dadurch gekennzeichnet, daß die Schicht S eine Dicke von höchstens 700 µm aufweist.

6. Halbfabrikat nach einem der Ansprüche 1 bis 5, dadurch gekennzeichnet, daß mindestens ein Teil der Schicht S einen wärmeüberstabilisierten Film aus thermoplastischem Harz umfaßt.

7. Halbfabrikat nach einem der Ansprüche 1 bis 6, dadurch gekennzeichnet, daß eine einzige Oberflächenschicht S das Gesamtgewichtsverhältnis an Stabilisierungsmittel von 3 bis 30mal höher als jenes der Schicht C aufweist.

8. Halbfabrikat nach einem der Ansprüche 1 bis 7, dadurch gekennzeichnet, daß zumindest eine der beiden Schichten ein Papiermaterial umfaßt.

9. Halbfabrikat nach einem der Ansprüche 1 bis 8, dadurch gekennzeichnet, daß zumindest eine der beiden Schichten auf dem Weg der Papiererzeugung erhalten wird und selbst aus einer Mehrzahl von Blättern gebildet sein kann.

10. Aus dem Halbfabrikat nach einem der Ansprüche 1 bis 9 verarbeitetes Produkt, dadurch gekennzeichnet, daß es einer Prägeformungs- oder Wärmeformungsoperation unterzogen worden ist und vorzugsweise ein Zubehör für die Fahrzeugindustrie ist.

## Claims

1. Heat-superstabilized semi-finished product, constituted of at least two layers containing a thermoplastic resin, capable of being subjected to a complementary heat treatment including melting of the thermoplastic resin in each one of the thermoplastic layers, said product having at least one surface layer S designed to be exposed to a source of heat during said heat treatment and at least one other layer C which is not directly exposed to said source of heat, characterized in that the layer S has an overall content by weight of stabilizer which is between 3 and 30 times greater than the quantity of heat stabilizer contained in the layer C; the layer S having a surface density varying between 50 and 600 g.m.$^{-2}$, each layer containing the thermoplastic resin being thus capable of being brought to melting point during the heat treatment without undergoing heat degradation.

2. Semi-finished product according to claim 1, characterized in that at least the layer S contains at least one transformation stabilizer.

3. Semi-finished product according to any one of claims 1 or 2, characterized in that said layers S and C contain at least one anti-ageing agent.

4. Semi-finished product according to claims 2 and 3, characterized in that said transformation stabilizer is also the anti-ageing agent.

5. Semi-finished product according to any one of claims 1 to 4, characterized in that said layer S has a thickness of not more than 700 micrometers.

6. Semi-finished product according to any one of claims 1 to 5, characterized in that at least part of said layer S comprises a heat-superstabilized film of thermoplastic resin.

7. Semi-finished product according to any one of claims 1 to 6, characterized in that only one surface layer S has the said overall content by weight of stabilizer of 3 to 30 times greater than that of said layer C.

8. Semi-finished product according to any one of claims 1 to 7, characterized in that at least one of the two layers contains a paper-making material.

9. Semi-finished product according to any one of claims 1 to 8, characterized in that at least one of the two layers is obtained by papermaking method and ran itself be composed of a plurality of sheets.

10. Product transformed from the semi-finished product according to any one of claims 1 to 9, characterized in that said product has undergone molding-stamping or thermoshaping treatments, and in that it is preferably an accessory to the motocar industry.